# FASCICULE DE BREVET EUROPEEN

(11) **EP 3 085 626 B1**
(45) Date de publication et mention de la délivrance du brevet: **29.08.2018**
(21) Numéro de dépôt: 16166500.5
(22) Date de dépôt: 21.04.2016
(51) Int. Cl.: B64D 45/02, F16B 5/02, F16B 37/14

(54) **CAPUCHON DE FIXATION ROTULÉ**
BEFESTIGUNGSKAPPE MIT GELENKKOPF
BALL-JOINTED NUT CAP

(30) Priorité: 21.04.2015 FR 1553564
(43) Date de publication de la demande: 26.10.2016
(73) Titulaire: Lisi Aerospace, 75012 Paris (FR)
(72) Inventeur: LETUVE, Jérémy, 95000 Cergy (FR); VERDIER, Florent, 92500 Rueil Malmaison (FR)
(74) Mandataire: Lavoix

(56) Documents cités:
- DE-A1-102010 038 067
- DE-U1- 9 104 419
- JP-A- 2013 119 335
- US-A- 1 988 813
- US-A- 6 053 681
- US-A1- 2014 321 944

## Description

La présente invention concerne un capuchon de fixation, du type comportant : une jupe sensiblement disposée selon un premier axe et définissant un volume interne, une première extrémité de ladite jupe étant formée par une base sensiblement disposée dans un plan perpendiculaire audit premier axe, une seconde extrémité de ladite jupe comprenant un orifice coaxial au premier axe et ouvrant sur le volume interne de la jupe ; et un élément de liaison de forme sensiblement linéaire, disposé selon un deuxième axe et comportant une première et une seconde extrémités, ladite première extrémité de l'élément de liaison étant apte à être assemblée à l'orifice de la jupe de sorte à fermer ledit orifice.

L'invention s'applique particulièrement au domaine aéronautique.

Un aéronef comporte typiquement des panneaux de structure en matériaux composites, reliés les uns aux autres et/ou à des éléments de structure métalliques par des fixations métalliques de type vis/écrou. En cas d'impact de foudre sur ce type d'assemblage, le passage des courants de foudroiement et la différence de conductivité électrique entre les panneaux composites et les fixations métalliques peut générer l'apparition d'arcs électriques ou de plasmas entre les panneaux et les fixations. De tels arcs électriques ou plasmas, peuvent endommager les fixations métalliques ou les panneaux de structure. Dans le cas de zone réservoir de carburant, ces arcs électriques ou plasma sont inacceptables car ils provoquent un risque d'explosion ou d'incendie.

Afin de contenir les arcs électriques ou plasmas provoqués par un foudroiement au niveau d'une fixation métallique et d'en éviter les effets indésirables, il est connu d'utiliser un capuchon de fixation du type précité, décrit par exemple dans le document JP2013-119335. La jupe est destinée à former un volume fermé de gaz autour de la vis et de l'écrou, afin de contenir l'apparition d'arcs électriques en cas d'impact de foudre sur la structure composite. L'élément de liaison est destiné à assembler le capuchon à la fixation, par exemple au moyen d'un taraudage vissé sur des filets de la vis.

Il arrive qu'à proximité de la fixation, la surface de la structure composite forme une pente par rapport à l'axe de la vis. Dans une des solutions illustrées dans le document JP2013-119335, la jupe comporte une base en matériau souple afin d'épouser la forme de la pente. Cette solution a pour inconvénient de nécessiter une pièce supplémentaire, formée de surcroît d'un matériau sensible aux agressions extérieures. La pression nécessaire pour déformer la base en matériaux souple de façon dissymétrique sur la pente provoque aussi des efforts de flexion au niveau de la jonction entre le capuchon et la fixation. Le capuchon doit donc être renforcé, ce qui le rend plus lourd, afin de supporter ces efforts de flexion.

Un premier aspect de l'invention se rapporte à un capuchon de fixation du type précité, dans lequel un bord de l'orifice de la jupe et la première extrémité de l'élément de liaison présentent des surfaces incurvées sensiblement complémentaires, de sorte à former une liaison de type rotule.

Contrairement aux capuchons de l'état de la technique, comprenant notamment un élément de liaison fixe par rapport à la jupe, une telle liaison rotule permet d'adapter les positions respectives de la jupe et de l'élément de liaison en fonction d'une éventuelle pente entre la structure et l'axe de la vis.

Suivant des variantes avantageuses de l'invention, le capuchon de fixation comporte l'une ou plusieurs des caractéristiques suivantes, prises isolément ou suivant toutes les combinaisons techniques possibles :
- la surface incurvée du bord de l'orifice de la jupe a une forme concave de portion de sphère, ladite concavité étant sensiblement orientée à l'opposé du volume interne de la jupe, et la surface incurvée de la première extrémité de l'élément de liaison présente une forme convexe complémentaire ;
- l'élément de liaison est configuré de sorte que, lorsque les surfaces incurvées du bord de l'orifice de la jupe et de la première extrémité de l'élément de liaison sont en contact, la seconde extrémité dudit élément de liaison est contenue dans le volume interne de la jupe ;
- la seconde extrémité de l'élément de liaison comporte un filetage disposé selon le deuxième axe ;
- la seconde extrémité de l'élément de liaison comporte une cavité taraudée disposée selon le deuxième axe ;
- la première extrémité de l'élément de liaison comporte en outre des moyens de coopération avec un outil de préhension.

Le premier aspect de l'invention se rapporte en outre à un ensemble de fixation, comprenant : un capuchon tel que décrit ci-dessus, et une vis comprenant une première extrémité de tête et une seconde extrémité filetée, ladite seconde extrémité filetée de la vis étant apte à s'assembler avec la seconde extrémité de l'élément de liaison.

Suivant des variantes avantageuses de l'invention, l'ensemble de fixation comporte l'une ou plusieurs des caractéristiques suivantes, prises isolément ou suivant toutes les combinaisons techniques possibles :
- la seconde extrémité de l'élément de liaison comporte un filetage disposé selon le deuxième axe et la seconde extrémité filetée de la vis comporte une cavité axiale taraudée, apte à s'assembler avec ledit filetage de la seconde extrémité de l'élément de liaison ;
- la seconde extrémité de l'élément de liaison comporte une cavité taraudée disposée selon le deuxième axe et la seconde extrémité filetée de la vis est apte à s'assembler avec ladite cavité taraudée de la seconde extrémité de l'élément de liaison ;
- l'ensemble comprend en outre un écrou apte à s'assembler avec la seconde extrémité filetée de la vis, ledit écrou comportant un corps tubulaire taraudé, disposé selon un troisième axe ;
- une extrémité du corps tubulaire de l'écrou présente une première surface incurvée, et l'écrou comporte une rondelle apte à entrer en contact avec ladite extrémité du corps tubulaire, ladite rondelle présentant une seconde surface incurvée complémentaire de la première surface incurvée, de sorte à former une liaison de type rotule avec l'extrémité du corps tubulaire.

Le premier aspect de l'invention se rapporte en outre à un assemblage comprenant : au moins une structure comprenant deux surfaces opposées, une première desdites surfaces étant sensiblement plane, la structure comprenant en outre un alésage débouchant sur chacune des deux surfaces ; et un ensemble de fixation tel que décrit précédemment, incluant un écrou. Dans ledit assemblage, la base de la jupe est au contact de la première surface de la structure ; la vis est insérée dans l'alésage de la structure, la seconde extrémité filetée de la vis débouchant sur la première surface de ladite structure et étant contenue dans le volume interne de la jupe ; l'écrou est vissé sur la seconde extrémité filetée de la vis et au contact de la première surface de la structure ; la seconde extrémité filetée de la vis est assemblée avec la seconde extrémité de l'élément de liaison ; et la première extrémité de l'élément de liaison est assemblée à l'orifice de la jupe de sorte à fermer ledit orifice.

Suivant des variantes avantageuses de l'invention, l'assemblage comporte l'une ou plusieurs des caractéristiques suivantes, prises isolément ou suivant toutes les combinaisons techniques possibles :
- l'alésage de la structure est disposé selon un quatrième axe incliné par rapport à une normale au plan de la première surface ; et le premier axe de la jupe et le deuxième axe de l'élément de liaison sont inclinés l'un par rapport à l'autre ;
- le quatrième axe de l'alésage est incliné d'un angle compris entre 0° et 7° par rapport à la normale au plan de la première surface de la structure ;
- le corps principal de l'écrou est vissé sur la seconde extrémité filetée de la vis, une rondelle dudit écrou étant au contact de la première surface de la structure, les surfaces incurvées du corps principal et de la rondelle étant au contact l'une de l'autre.

Un deuxième aspect de l'invention se rapporte à un capuchon de fixation comprenant : une jupe sensiblement disposée selon un premier axe et définissant un volume interne, une première extrémité de ladite jupe étant formée par une base sensiblement disposée dans un plan perpendiculaire audit premier axe, une seconde extrémité de ladite jupe comprenant un orifice coaxial au premier axe et ouvrant sur le volume interne de la jupe ; et un élément de liaison de forme sensiblement linéaire, disposé selon un deuxième axe et comportant une première et une seconde extrémités, ladite première extrémité de l'élément de liaison étant apte à coopérer avec l'orifice de la jupe de sorte à fermer ledit orifice. La seconde extrémité de l'élément de liaison comporte un filetage mâle disposé selon le deuxième axe.

Contrairement aux capuchons de l'état de la technique, comprenant notamment un élément de liaison taraudé, un tel élément de liaison fileté permet un assemblage avec une cavité taraudée ménagée dans une vis.

Le deuxième aspect de l'invention se rapporte en outre à un ensemble pour fixation, comprenant un capuchon de fixation tel que décrit ci-dessus, ainsi qu'une vis comprenant une première extrémité de tête et une seconde extrémité filetée, ladite seconde extrémité filetée de la vis comprenant une cavité axiale taraudée apte à s'assembler avec la seconde extrémité filetée de l'élément de liaison. De préférence, l'ensemble pour fixation comporte également un écrou apte à s'assembler avec l'extrémité filetée de la vis.

Le deuxième aspect de l'invention se rapporte en outre à un assemblage comprenant : au moins une structure comprenant deux surfaces opposées et un alésage débouchant sur chacune des deux surfaces ; et un ensemble de fixation tel que décrit précédemment, incluant un écrou.

L'invention sera mieux comprise à la lecture de la description qui va suivre, donnée uniquement à titre d'exemple non limitatif et faite en se référant aux dessins sur lesquels :
- la figure 1 est une vue en coupe d'un assemblage selon un premier mode de réalisation de l'invention ;
- la figure 2 est une vue en coupe d'un assemblage selon un deuxième mode de réalisation de l'invention ; et
- la figure 3 est une vue en coupe d'un assemblage selon un troisième mode de réalisation de l'invention.

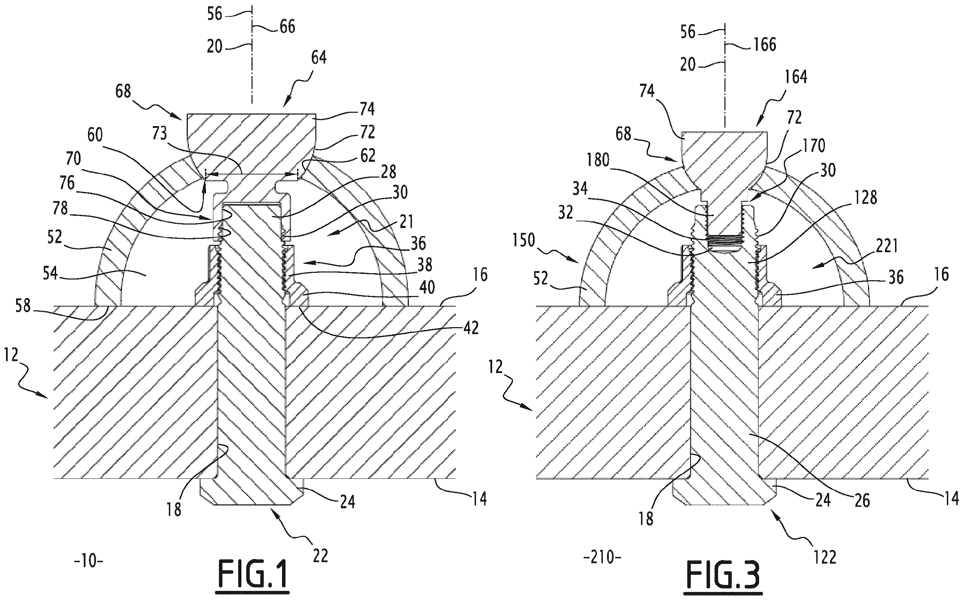

Les figures 1, 2 et 3 représentent respectivement des assemblages 10, 110, 210 selon un premier, un deuxième et un troisième modes de réalisation de l'invention. Dans la description ci-dessous, les éléments communs aux assemblages 10, 110 et 210 sont désignés par les mêmes numéros de référence.

Dans la description ci-dessous, on considère un premier axe 56, 156 ; un deuxième axe 66, 166 ; un troisième axe 20 et un quatrième axe 146, qui seront décrits plus en détails ci-après.

L'assemblage 10, 110, 210 comporte une structure 12, 112 comprenant une première surface 14 et une deuxième surface 16, 116, opposée à la première surface 14. Préférentiellement, les première 14 et deuxième 16, 116 surfaces appartiennent à au moins deux éléments de structure distincts. Pour simplifier, un seul élément de structure est représenté sur les figures 1 à 3.

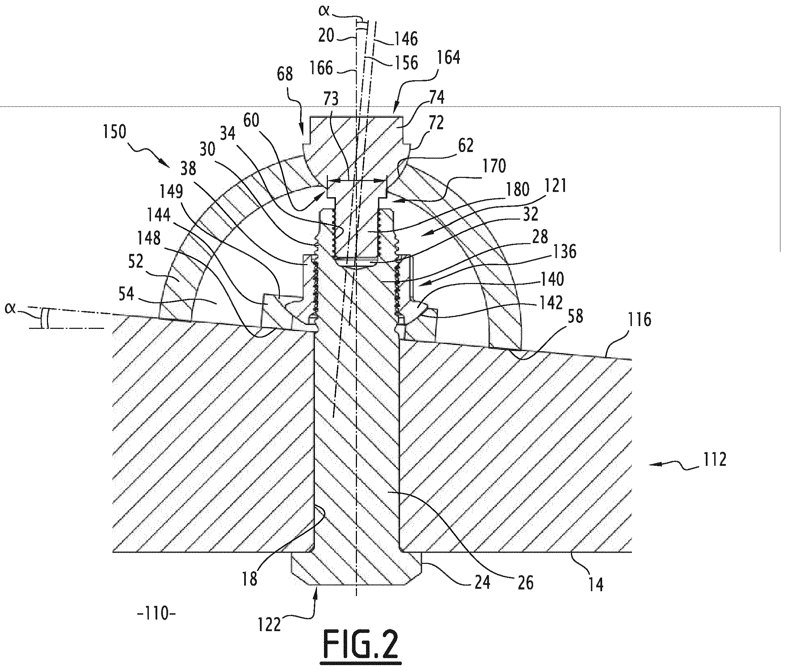

Dans les modes de réalisation des figures 1 à 3, les première 14 et deuxième 16, 116 surfaces sont sensiblement planes. Dans les modes de réalisation des figures 1 et 3, la deuxième surface 16 de la structure 12 est parallèle à la première surface 14. En revanche, dans le mode de réalisation de la figure 2, la deuxième surface 116 de la structure 112 est inclinée d'un angle α par rapport à la première surface 14. Préférentiellement, l'angle α est compris entre 0° et 10°, plus préférentiellement compris entre 0° et 7°. L'angle α est par exemple égal à 5°.

La structure 12, 112 comprend en outre un alésage 18 débouchant sur chacune des première 14 et deuxième 16, 116 surfaces. L'alésage 18 est disposé selon le troisième axe 20, sensiblement perpendiculaire à la première surface 14.

L'assemblage 10, 110, 210 comporte en outre une fixation 21, 121, 221 de type vis/écrou.

La fixation 21, 121, 221 comporte une vis 22, 122. Ladite vis 22, 122 a une forme sensiblement linéaire et comprend successivement une tête 24, un fût 26 et une portion d'extrémité 28, 128 comportant un filetage 30.

La vis 22, 122 est dimensionnée afin que le fût 26 puisse être inséré dans l'alésage 18, la tête 24 étant en appui sur la première surface 14 et la portion filetée 28 dépassant de la deuxième surface 16, 116. La vis 22, 122 est ainsi disposée selon le troisième axe 20.

Dans les modes de réalisation des figures 1 à 3, la tête 24 est protubérante. En variante non représentée, la tête 24 est fraisée et l'alésage 18 présente une forme complémentaire à ladite tête, à proximité de la première surface 14 de la structure 12, 112.

Dans le mode de réalisation de la figure 1, la portion filetée 28 de la vis 22 est pleine. En variante non représentée, la vis peut posséder une empreinte axiale, par exemple hexagonale ou multilobée, ou une cavité taraudée.

Dans les modes de réalisation des figures 2 et 3, la vis 122 comporte une cavité taraudée. Plus précisément, une extrémité de la portion filetée 128, opposée à la tête 24, comporte une cavité axiale 32 de forme sensiblement cylindrique. Une paroi latérale de la cavité 32 comporte un taraudage 34.

La fixation 21, 121, 221 comporte en outre un écrou 36, 136. L'écrou 36, 136 comporte un corps tubulaire 38 taraudé, de manière à pouvoir être vissé sur la portion filetée 28, 128 de la vis 22, 122. Le corps tubulaire 38 est alors disposé selon le même axe 20 que la vis 22, 122.

Dans les modes de réalisation des figures 1 et 3, la fixation 21, 221 comporte un écrou 36 dont le corps tubulaire 38 est solidaire d'une embase 40, comprenant une surface d'extrémité 42 plane. Lorsque l'écrou 36 est assemblé à la vis 22 comme sur la figure 1, ou à la vis 122 comme sur la figure 3, la surface d'extrémité 42 est perpendiculaire à l'axe 20 et est au contact de la deuxième surface 16 de la structure 12.

Par ailleurs, dans le mode de réalisation de la figure 1, l'écrou 36 et la vis 22 sont dimensionnés de sorte que, lorsque l'écrou 36 est assemblé à la vis 22, des filets 30 de la portion filetée 28 dépassent axialement du corps tubulaire 38.

Dans le mode de réalisation de la figure 2, la fixation 121 comporte un écrou 136 rotulé. Plus précisément, le corps tubulaire 38 de l'écrou 136 est solidaire d'une embase 140, comprenant une surface d'extrémité 142 de forme incurvée convexe. Plus précisément, la surface 142 a la forme d'une portion de sphère dont un centre est disposé sur le troisième axe 20.

L'écrou 136 comporte en outre une rondelle 144, disposée selon le quatrième axe 146. Une première face 148 plane de la rondelle 144 est au contact de la deuxième surface 116 de la structure 112 lorsque l'écrou 136 est assemblé à la vis 122. Le quatrième axe 146 est ainsi incliné d'un angle α par rapport au troisième axe 20. Une seconde face 149 de la rondelle 144 a une forme incurvée concave, complémentaire de la surface d'extrémité 142 de l'embase 140. Plus précisément, la seconde face 149 a la forme d'une portion de sphère dont un centre est disposé sur le quatrième axe 146.

Un écrou rotulé similaire à l'écrou 136 est notamment décrit dans le document JP2013-119335.

Lorsque l'écrou 136 est assemblé à la vis 122, comme sur la figure 2, la seconde face 149 de la rondelle 144 est au contact de la surface d'extrémité 142 de l'embase 140. L'axe 20 du corps tubulaire 38 et l'axe 146 de la rondelle 144 sont inclinés d'un angle α l'un par rapport à l'autre, l'angle α étant fonction de l'inclinaison entre les première 14 et deuxième 116 surfaces de la structure 112.

Selon une variante non représentée, l'écrou 136 est utilisé à la place de l'écrou 36 dans l'assemblage 10, 210 de la figure 1 ou 3 ; l'axe 20 du corps tubulaire 38 et l'axe 146 de la rondelle 144 sont alors confondus.

L'assemblage 10, 110, 210 comporte en outre un capuchon de fixation 50, 150. Dans les modes de réalisation des figures 1 à 3, la fixation 21, 121, 221 et l'espace tout autour de ladite fixation sont intégralement confinés à l'intérieur du capuchon 50, 150. Le capuchon de fixation 50, 150 est constitué d'un matériau électriquement isolant, préférentiellement d'une résine polymère telle qu'une résine polyimide ou PEEK.

Le capuchon 50, 150 comporte notamment une jupe 52, destinée à définir un volume interne 54 avec la deuxième surface 16, 116 de la structure 12, 112, autour de l'alésage 18. La jupe 52 a préférentiellement une forme de révolution, disposée selon le premier axe 56, 156. Dans les modes de réalisation des figures 1 à 3, la jupe 52 a notamment la forme d'une demi-sphère.

Une première extrémité de la jupe 52 est formée par une surface de base 58, plane et perpendiculaire au premier axe 56, 156. La surface de base 58 est destinée à entrer en contact avec la deuxième surface 16, 116 de la structure 12, 112.

Une seconde extrémité de ladite jupe comprend un orifice 60, de forme sensiblement circulaire, coaxial au premier axe 56, 156. L'orifice 60 fait communiquer l'extérieur de la jupe 52 et le volume interne 54.

Un bord 62 de l'orifice 60 présente une surface incurvée concave. Plus précisément, le bord 62 a la forme d'une portion de sphère dont un centre est disposé sur le premier axe 56, 156, à l'opposé du volume interne 54 de la jupe 52.

Le capuchon 50, 150 comporte en outre un élément de liaison 64, 164, destiné à solidariser la jupe 52 à la fixation 21, 121, 221. L'élément de liaison 64, 164 est de forme sensiblement linéaire, disposé selon le deuxième axe 66, 166. L'élément de liaison 64, 164 comprend une première portion 68 et une deuxième portion 70, 170, alignées selon le deuxième axe 66, 166.

La première portion 68 est destinée à l'assemblage de l'élément de liaison 64, 164 avec la jupe 52. La première portion 68 comporte notamment une surface incurvée convexe 72, de forme complémentaire à celle du bord 62 de l'orifice 60 de la jupe 52. Plus précisément, la surface incurvée convexe 72 a la forme d'une portion de sphère dont un centre est disposé sur le deuxième axe 66, 166, à l'opposé de la deuxième portion 70, 170 de l'élément de liaison 64, 164.

A la jonction entre la première portion 68 et la deuxième portion 70, 170, une dimension radiale 73 de l'élément de liaison 64, 164 est inférieure à un diamètre minimal de l'orifice 60. Lorsque la surface incurvée 72 est au contact du bord 62, ladite jonction entre les première et deuxième portions est située dans l'orifice 60. Il est alors possible d'incliner plus ou moins la jupe par rapport à l'élément de liaison 64, 164, dans toutes les directions radiales. En d'autres termes, la surface incurvée 72 et le bord 62 de l'orifice 60 forment une liaison de type rotule entre l'élément de liaison 64, 164 et la jupe 52.

De préférence, la surface incurvée 72 et le bord 62 sont aptes à former une liaison étanche, de manière à fermer le volume interne 54 lorsque l'assemblage 10, 110, 210 est assemblé comme sur les figures 1 à 3. Par exemple l'étanchéité peut être complétée par une couche de mastic visqueux de type polysulfide, ou à base de silicone ou de fluo silicone, couramment utilisé dans l'industrie aéronautique pour recouvrir les écrous.

De préférence, la première portion 68 comporte en outre des moyens de coopération avec un outil permettant d'exercer un couple sur la portion 68. Dans les modes de réalisation des figures 1 à 3, la première portion 68 comporte une surface 74 à six pans, située à l'opposé de la deuxième portion 70, 170 par rapport à la surface incurvée 72, de sorte à dépasser à l'extérieur du capuchon 50, 150.

La deuxième portion 70, 170 de l'élément de liaison 64, 164 est destinée à l'assemblage dudit élément de liaison 64, 164 avec la vis 22, 122 afin de solidariser la jupe 52 à la fixation 21, 121, 221. Dans les modes de réalisation des figures 1 à 3, la deuxième portion 70, 170 a sensiblement une forme de révolution selon le deuxième axe 66, 166.

Dans les modes de réalisation des figures 1 à 3, un diamètre maximal de la deuxième portion 70, 170 est inférieur à un diamètre minimal de l'orifice 60 de la jupe 52. Ladite deuxième portion 70, 170 peut ainsi être insérée dans le volume interne 54 par ledit orifice 60, depuis l'extérieur de la jupe.

Dans le mode de réalisation de la figure 1, la deuxième portion 70 comprend une cavité axiale 76, disposée selon le deuxième axe 66. La cavité 76 comporte un taraudage 78 de manière à pouvoir être vissée sur le filetage 30 de la portion d'extrémité 28 de la vis 22.

Dans les modes de réalisation des figures 2 et 3, la deuxième portion 170 comprend une extrémité filetée 180, disposée selon le deuxième axe 166. L'extrémité filetée 180 est apte à être vissée dans la cavité taraudée axiale 32 de la vis 122.

Un procédé de montage de l'assemblage 10, 110, 210 va maintenant être décrit.

La vis 22, 122 est tout d'abord insérée dans l'alésage 18, du côté de la première surface 14 de la structure 12, 112. La portion filetée 28, 128 de la vis émerge du côté de la deuxième surface 16, 116.

La fixation 21, 121, 221 est ensuite assemblée par vissage de l'écrou 36, 136 sur la portion filetée 28, 128 émergente. Dans les modes de réalisation des figures 1 et 3, la surface 42 de l'embase 40 est serrée contre la deuxième surface 16 de la structure 12. Dans le mode de réalisation de la figure 1, à la fin du serrage, des filets 30 de la vis 22 dépassent axialement de l'écrou 36.

Dans le mode de réalisation de la figure 2, la rondelle 144 est tout d'abord enfilée sur la portion filetée 128, puis le corps tubulaire 38 est vissé jusqu'à ce que la rondelle 144 soit serrée entre la deuxième surface 116 de la structure 112 et la surface d'extrémité 142 de l'embase 140.

Le capuchon 50, 150 est ensuite assemblé à la fixation 21, 121, 221. Plus précisément, la jupe 52 est posée sur la deuxième surface 16, 116 de la structure 12, 112, par-dessus la fixation 21, 121, 221. La deuxième portion 70, 170 de l'élément de liaison 64, 164 est ensuite introduite à l'intérieur de la jupe 52 par l'orifice 60, et assemblée à la portion filetée 28, 128 de la vis 22, 122. Dans le mode de réalisation de la figure 1, le taraudage 78 de la cavité 76 de l'élément de liaison 64 est vissé sur le filetage 30 qui dépasse de l'écrou 36. Dans les modes de réalisation des figures 2 et 3, l'extrémité filetée 180 de l'élément de liaison 164 est vissée dans le taraudage 34 de la cavité axiale 32. Le deuxième axe 66, 166 de l'élément de liaison 64, 164 est alors confondu avec le troisième axe 20 de l'alésage 18, de la vis 122 et du corps tubulaire 38 de l'écrou 36, 136.

Le vissage de la deuxième portion 70, 170 de l'élément de liaison 64, 164 est poursuivi jusqu'à ce que la surface incurvée convexe 72 de la première portion 68 de l'élément de liaison 64, 164 soit serrée au contact du bord 62 de l'orifice 60 de la jupe 52. Eventuellement, le serrage est effectué à l'aide d'une clé coopérant avec la surface 74 à six pans de la première portion 68.

Lorsque le capuchon 50, 150 est installé, la surface de base 58 de la jupe 52 est plaquée contre la deuxième surface 16, 116 de la structure 12, 112, la portion filetée 28, 128 et l'écrou 36, 136 étant reçus dans le volume interne 54. Dans les modes de réalisation des figures 1 et 3, le premier axe 56 de la jupe 52 est alors confondu avec le troisième axe 20 de l'alésage 18, de la vis 22, 122 et de l'écrou 36. Dans le mode de réalisation de la figure 2, le premier axe 156 de la jupe 52 est incliné d'un angle α par rapport au troisième axe 20 de l'alésage 18, de la vis 22 et du corps tubulaire 38 de l'écrou 136. Le premier axe 156 est également parallèle au quatrième axe 146 de la rondelle 144.

L'assemblage 10, 110, 210 ainsi réalisé est protégé des effets de la foudre. Dans les modes de réalisation des figures 1 et 3, le deuxième axe 66, 166 de l'élément de liaison 64, 164 est alors confondu avec le premier axe 56 de la jupe 52. Dans le mode de réalisation de la figure 2, le deuxième axe 166 de l'élément de liaison 164 est incliné d'un angle α par rapport au premier axe 156 de la jupe 52.

A la fin du serrage de l'élément de liaison 64, 164, l'orifice 60 se retrouve fermé, isolant le volume interne 54 de l'extérieur de la jupe 52. En cas d'impact de foudre au niveau de la tête de vis 24, l'air contenu dans le volume interne 54 empêche la propagation de l'arc électrique ou des plasmas vers le volume d'air extérieur à la jupe 52. Le matériau isolant formant l'élément de liaison 64, 164 empêche également la propagation de l'arc électrique vers le volume extérieur.

La liaison rotule entre l'élément de liaison 64, 164 et la jupe 52, formée par la surface incurvée convexe 72 de l'élément de liaison 64, 164 et le bord 62 de l'orifice de la jupe, permet d'installer le capuchon 50, 150 en inclinant l'axe 66, 166 de l'élément de liaison 64, 164 par rapport à l'axe 56, 156 de la jupe 52. L'assemblage 10, 110, 210 est ainsi compatible avec une structure 112 dont les deux surfaces opposées 14, 116 ne sont pas parallèles. Dans ce cas, un écrou 136 rotulé est préférentiellement utilisé.

En variante non représentée, un mastic est appliqué entre la base 58 de la jupe et la surface 16, 116, et/ou dans le volume interne 54, et/ou entre la surface incurvée convexe 72 et le bord 62, afin d'augmenter le niveau d'étanchéité de l'assemblage 10, 110, 210.

## Revendications

1. Capuchon (50, 150) de fixation pour la protection d'une fixation (21, 121, 221) contre la foudre, comprenant :
- une jupe (52) sensiblement disposée selon un premier axe (56, 156) et définissant un volume interne (54), une première extrémité de ladite jupe étant formée par une base (58) sensiblement disposée dans un plan perpendiculaire audit premier axe, une seconde extrémité de ladite jupe comprenant un orifice (60) coaxial au premier axe et ouvrant sur le volume interne de la jupe ; et
- un élément de liaison (64, 164) de forme sensiblement linéaire, disposé selon un deuxième axe (66, 166) et comportant une première (68) et une seconde (70, 170) extrémités, ladite première extrémité de l'élément de liaison étant apte à être assemblée à l'orifice de la jupe de sorte à fermer ledit orifice, ladite seconde extrémité de l'élément de liaison étant apte à être assemblée à la fixation (21, 121, 221),
le capuchon étant **caractérisé en ce qu'**un bord de l'orifice de la jupe et la première extrémité de l'élément de liaison présentent des surfaces incurvées (62, 72) sensiblement complémentaires, de sorte à former une liaison de type rotule.

2. Capuchon selon la revendication 1, dans lequel la surface incurvée (62) du bord de l'orifice de la jupe a une forme concave de portion de sphère, ladite concavité étant sensiblement orientée à l'opposé du volume interne (54) de la jupe, et la surface incurvée (72) de la première extrémité de l'élément de liaison présente une forme convexe complémentaire.

3. Capuchon selon la revendication 1 ou la revendication 2, dans lequel l'élément de liaison est configuré de sorte que, lorsque les surfaces incurvées du bord de l'orifice de la jupe et de la première extrémité de l'élément de liaison sont en contact, la seconde extrémité (70, 170) dudit élément de liaison est contenue dans le volume interne de la jupe.

4. Capuchon (150) selon l'une des revendications précédentes, dans lequel la seconde extrémité de l'élément de liaison (164) comporte un filetage (180) disposé selon le deuxième axe.

5. Capuchon (50) selon l'une des revendications précédentes, dans lequel la seconde extrémité de l'élément de liaison (64) comporte une cavité (76) taraudée (78) disposée selon le deuxième axe.

6. Capuchon selon l'une des revendications précédentes, dans lequel la première extrémité de l'élément de liaison comporte en outre des moyens (74) de coopération avec un outil de préhension.

7. Ensemble de fixation, comprenant :
- un capuchon (50, 150) selon l'une des revendications précédentes, et
- une vis (22, 122) comprenant une première extrémité de tête (24) et une seconde extrémité filetée (28, 128), ladite seconde extrémité filetée de la vis étant apte à s'assembler avec la seconde extrémité (70, 170) de l'élément de liaison (64, 164).

8. Ensemble selon la revendication 7 prise en combinaison avec la revendication 4, dans lequel la seconde extrémité filetée (128) de la vis (122) comporte une cavité axiale (32) taraudée (34), apte à s'assembler avec le filetage (180) de la seconde extrémité de l'élément de liaison (164).

9. Ensemble selon la revendication 7 prise en combinaison avec la revendication 5, dans lequel la seconde extrémité filetée (28) de la vis (22) est apte à s'assembler avec la cavité taraudée (76) de la seconde extrémité de l'élément de liaison (64).

10. Ensemble selon l'une des revendications 7 à 9, comprenant en outre un écrou (36, 136) apte à s'assembler avec la seconde extrémité filetée (28, 128) de la vis de sorte à former la fixation (21, 121, 221), ledit écrou comportant un corps tubulaire (38) taraudé, disposé selon un troisième axe (20).

11. Ensemble selon la revendication 10, dans lequel :
- une extrémité (140) du corps tubulaire de l'écrou (136) présente une première surface incurvée (142), et
- l'écrou comporte une rondelle (144) apte à entrer en contact avec ladite extrémité du corps tubulaire, ladite rondelle présentant une seconde surface incurvée (149) complémentaire de la première surface incurvée, de sorte à former une liaison de type rotule avec l'extrémité (140) du corps tubulaire.

12. Assemblage (10, 110, 210) comprenant :
- au moins une structure (12, 112) comprenant deux surfaces opposées (14, 16, 116), une première (16, 116) desdites surfaces étant sensiblement plane, la structure comprenant en outre un alésage (18) débouchant sur chacune des deux surfaces ; et
- un ensemble selon la revendication 10 ou la revendication 11,
dans lequel :
- la base (58) de la jupe (52) est au contact de la première surface (16, 116) de la structure (12, 112) ;
- la vis (22, 122) est insérée dans l'alésage de la structure, la seconde extrémité filetée (28, 128) de la vis débouchant sur la première surface de ladite structure et étant contenue dans le volume interne (54) de la jupe ;
- l'écrou (36, 136) est vissé sur la seconde extrémité filetée de la vis et au contact de la première surface de la structure ;
- la seconde extrémité filetée de la vis est assemblée avec la seconde extrémité (70, 170) de l'élément de liaison (64, 164) ; et
- la première extrémité (68) de l'élément de liaison est assemblée à l'orifice (60) de la jupe (52) de sorte à fermer ledit orifice.

13. Assemblage (110) selon la revendication 12, dans laquelle :
- l'alésage (18) de la structure (112) est disposé selon un quatrième axe (20) incliné par rapport à une normale au plan de la première surface (116) ; et
- le premier axe (156) de la jupe et le deuxième axe (166) de l'élément de liaison sont inclinés l'un par rapport à l'autre.

14. Assemblage selon la revendication 13, dans laquelle le quatrième axe (20) de l'alésage est incliné d'un angle (α) compris entre 0° et 7° par rapport à la normale au plan de la première surface (116) de la structure.

15. Assemblage (110) selon l'une des revendications 12 à 14 prises en combinaison avec la revendication 11, dans laquelle le corps principal (38) de l'écrou est vissé sur la seconde extrémité filetée (128) de la vis, la rondelle (144) dudit écrou étant au contact de la première surface (116) de la structure, les surfaces incurvées (142, 149) du corps principal et de la rondelle étant au contact l'une de l'autre.

## Patentansprüche

1. Befestigungskappe (50, 150) für den Schutz einer Befestigung (21, 121, 221) gegen Blitzschlag, umfassend:
- eine Haube (52), die im Wesentlichen gemäß einer ersten Achse (56, 156) angeordnet ist und ein Innenvolumen (54) begrenzt, wobei ein erstes Ende der Haube durch eine Basis (58) gebildet ist, die im Wesentlichen in einer senkrechten Ebene zu der ersten Achse angeordnet ist,
wobei ein zweites Ende der Haube eine Öffnung (60) aufweist, die koaxial zur ersten Achse liegt und sich zu dem Innenvolumen der Haube öffnet; und
- ein Verbindungselement (64, 164) von im Wesentlichen linearer Form, das gemäß einer zweiten Achse (66, 166) angeordnet ist und ein erstes (68) und (70, 170) Ende aufweist, wobei das erste Ende des Verbindungselements geeignet ist, in die Öffnung der Haube eingesetzt zu werden, um die Öffnung zu verschließen, und das zweite Ende des Verbindungselements geeignet ist, mit der Befestigung (21, 121, 221) zusammengesetzt zu werden,
- wobei die Kappe **dadurch gekennzeichnet ist, dass** ein Rand der Öffnung der Haube und das erste Ende des Verbindungselements im Wesentlichen komplementäre gekrümmte Flächen (62, 72) derart aufweisen, dass sie eine Kugelgelenkverbindung bilden.

2. Kappe nach Anspruch 1, bei der die gekrümmte Fläche (62) des Randes der Öffnung der Haube eine konkave Form eines Kugelabschnitts aufweist, wobei die Konkavität im Wesentlichen entgegengesetzt zum Innenvolumen (54) der Haube gerichtet ist und die gekrümmte Fläche (72) des ersten Endes des Verbindungselements eine komplementäre konvexe Form aufweist.

3. Kappe nach Anspruch 1 oder Anspruch 2, bei der das Verbindungselement derart ausgebildet ist, dass, wenn die gekrümmten Flächen des Randes der Öffnung der Haube und das erste Ende des Verbindungselements in Kontakt sind, das zweite Ende (70, 170) des Verbindungselements in dem Innenvolumen der Haube aufgenommen ist.

4. Kappe (150) nach einem der vorhergehenden Ansprüche, bei der das zweite Ende des Verbindungselements (164) ein Außengewinde (180) aufweist, das gemäß der zweiten Achse angeordnet ist.

5. Kappe (50) nach einem der vorhergehenden Ansprüche, bei der das zweite Ende des Verbindungselements (64) ein Gewindeloch (76, 78) aufweist, das gemäß der zweiten Achse angeordnet ist.

6. Kappe nach einem der vorhergehenden Ansprüche, bei der das erste Ende des Verbindungselements außerdem Mittel (74) zur Zusammenarbeit mit einem Greifwerkzeug aufweist.

7. Befestigungsanordnung, umfassend:
- eine Kappe (50, 150) nach einem der vorhergehenden Ansprüche und
- eine Schraube (22, 122), die ein erstes Kopfende (24) und ein zweites Gewindeende (28, 128) umfasst, wobei das zweite Gewindeende der Schraube geeignet ist, mit dem zweiten Ende (70, 170) des Verbindungselements (64, 164) zusammengesetzt zu werden.

8. Anordnung nach Anspruch 7 in Verbindung mit Anspruch 4, bei der das zweite Gewindeende (128) der Schraube (122) ein axiales (32) Gewindeloch (34) aufweist, das geeignet ist, mit dem Außengewinde (180) des zweiten Endes des Verbindungselements (164) zusammengesetzt zu werden.

9. Anordnung nach Anspruch 7 in Verbindung mit Anspruch 5, bei der das zweite Gewindeende (28) der Schraube (22) geeignet ist, mit dem Gewindeloch (76) des zweiten Endes des Verbindungselements (64) zusammengesetzt zu werden.

10. Anordnung nach einem der Ansprüche 7 bis 9, außerdem eine Mutter (36, 136) umfassend, die geeignet ist, mit dem zweiten Gewindeende (28, 128) der Schraube derart zusammengesetzt zu werden, dass die Befestigung (21, 121, 221) gebildet wird, wobei die Mutter einen mit Gewinde versehenen rohrförmigen Körper (38) aufweist, der gemäß einer dritten Achse (20) angeordnet ist.

11. Anordnung nach Anspruch 10, bei der:
- ein Ende (140) des rohrförmigen Körpers der Mutter (136) eine erste gekrümmte Fläche (142) aufweist und
- die Mutter eine Scheibe (144) aufweist, die geeignet ist, in Kontakt mit dem Ende des rohrförmigen Körpers zu treten, wobei die Scheibe eine zweite gekrümmte Fläche (149) komplementär zur ersten gekrümmten Fläche derart aufweist, dass mit dem Ende (140) des rohrförmigen Körpers eine Kugelgelenkverbindung gebildet wird.

12. Baugruppe (10, 110, 210), umfassend:
- mindestens eine zwei entgegengesetzte Flächen (14, 16, 116) umfassende Struktur (12, 112), wobei eine erste (16, 116) der Flächen im Wesentlichen eben ist und die Struktur außerdem eine Bohrung (18) umfasst, die an jeder der zwei Flächen mündet; und
- eine Anordnung nach Anspruch 10 oder Anspruch 11, bei der:
- die Basis (58) der Haube (52) in Kontakt mit der ersten Fläche (16, 116) der Struktur (12, 112) ist;
- die Schraube (22, 122) in die Bohrung der Struktur eingesetzt ist, wobei das zweite Gewindeende (28, 128) der Schraube an der zweiten Fläche der Struktur mündet und in dem Innenvolumen (54) der Haube aufgenommen ist;
- die Mutter (36,136) auf das zweite Gewindeende der Schraube und in Kontakt mit der ersten Fläche der Struktur geschraubt ist;
- das zweite Gewindeende der Schraube mit dem zweiten Ende (70, 170) des Verbindungselements (64, 164) zusammengesetzt ist; und
- das erste Ende (68) des Verbindungselements in die Öffnung (60) der Haube (52) eingesetzt ist, um die Öffnung zu verschließen.

13. Baugruppe (110) nach Anspruch 12, bei der:
- die Bohrung (18) der Struktur (112) gemäß einer vierten Achse (20) angeordnet ist, die in Bezug auf die Senkrechte zur Ebene der zweiten Fläche (116) geneigt ist; und
- die erste Achse (156) der Haube und die zweite Achse (166) des Verbindungselements zueinander geneigt sind.

14. Baugruppe nach Anspruch 13, bei der die vierte Achse (20) der Bohrung um einen Winkel (α) zwischen 0° und 7° in Bezug auf die Senkrechte zur Ebene der ersten Fläche (116) der Struktur geneigt ist.

15. Baugruppe (110) nach einem der Ansprüche 12 bis 14 in Kombination mit Anspruch 11, bei der der Hauptkörper (38) der Mutter auf das zweite Gewindeende (128) der Schraube geschraubt ist, wobei die Scheibe (144) der Mutter in Kontakt mit der ersten Fläche (116) der Struktur ist und die gekrümmten Flächen (142, 149) des Hauptkörpers und der Scheibe miteinander in Kontakt sind.

## Claims

1. Fixing cap (50, 150) for protecting a fixing (21, 121, 221) from lightning, comprising:
- a skirt (52) which is arranged substantially along a first axis (56, 156) and defines an internal volume (54), a first end of said skirt being formed by a base (58) arranged substantially in a plane perpendicular to said first axis,
a second end of said skirt having an orifice (60) which is coaxial with the first axis and opens into the internal volume of the skirt; and
- a connecting element (64, 164) of substantially linear shape which is arranged along a second axis (66, 166) and comprises a first end (68) and a second end (70, 170), said first end of the connecting element being capable of being fitted to the orifice of the skirt so as to close said orifice, said second end of the connecting element being capable of being fitted to the fixing (21, 121, 122),
the cap being **characterised in that** an edge of the orifice of the skirt and the first end of the connecting element have substantially complementary curved surfaces (62, 72) so as to form a connection of the ball joint type.

2. Cap according to claim 1, wherein the curved surface (62) of the edge of the orifice of the skirt has a concave shape of a portion of a sphere, said concavity being oriented substantially contrary to the internal volume (54) of the skirt, and the curved surface (72) of the first end of the connecting element has a complementary convex shape.

3. Cap according to claim 1 or claim 2, wherein the connecting element is so configured that, when the curved surfaces of the edge of the orifice of the skirt and of the first end of the connecting element are in contact, the second end (70, 170) of said connecting element is contained within the internal volume of the skirt.

4. Cap (150) according to any one of the preceding claims, wherein the second end of the connecting element (164) has a thread (180) arranged along the second axis.

5. Cap (50) according to any one of the preceding claims, wherein the second end of the connecting element (64) has a tapped (78) cavity (76) arranged along the second axis.

6. Cap according to any one of the preceding claims, wherein the first end of the connecting element further has means (74) for cooperation with a gripping tool.

7. Fixing arrangement, comprising:
- a cap (50, 150) according to any one of the preceding claims, and
- a screw (22, 122) having a first head end (24) and a second, threaded end (28, 128), said second, threaded end of the screw being capable of being fitted to the second end (70, 170) of the connecting element (64, 164).

8. Arrangement according to claim 7 taken in combination with claim 4, wherein the second, threaded end (128) of the screw (122) has a tapped (34) axial cavity (32) which is capable of being fitted to the thread (180) of the second end of the connecting element (164).

9. Arrangement according to claim 7 taken in combination with claim 5, wherein the second. threaded end (28) of the screw (22) is capable of being fitted to the tapped cavity (76) of the second end of the connecting element (64).

10. Arrangement according to any one of claims 7 to 9, further comprising a nut (36, 136) capable of being fitted to the second, threaded end (28, 128) of the screw so as to form the fixing (21, 121, 221), said nut comprising a tapped tubular body (38) arranged along a third axis (20).

11. Arrangement according to claim 10, wherein:
- an end (140) of the tubular body of the nut (136) has a first curved surface (142), and
- the nut has a washer (144) capable of coming into contact with said end of the tubular body, said washer having a second curved surface (149) which is complementary to the first curved surface, so as to form a connection of the ball joint type with the end (140) of the tubular body.

12. Assembly (10, 110, 210) comprising:
- at least one structure (12, 112) comprising two opposing surfaces (14, 16, 116), a first (16, 116) of said surfaces being substantially flat, the structure further comprising a bore (18) which opens at each of the two surfaces; and
- an arrangement according to claim 10 or claim 11,
wherein:
- the base (58) of the skirt (52) is in contact with the first surface (16, 116) of the structure (12, 112);
- the screw (22, 122) is inserted into the bore of the structure, the second, threaded end (28, 128) of the screw opening at the first surface of said structure and being contained within the internal volume (54) of the skirt;
- the nut (36, 136) is screwed onto the second, threaded end of the screw and in contact with the first surface of the structure;
- the second, threaded end of the screw is fitted to the second end (70, 170) of the connecting element (64, 164); and
- the first end (68) of the connecting element is fitted to the orifice (60) of the skirt (52) so as to close said orifice.

13. Assembly (110) according to claim 12, wherein:
- the bore (18) of the structure (112) is arranged along a fourth axis (20) which is inclined relative to a normal to the plane of the first surface (116); and
- the first axis (156) of the skirt and the second axis (166) of the connecting element are inclined relative to one another.

14. Assembly according to claim 13, wherein the fourth axis (20) of the bore is inclined at an angle (α) of between 0° and 7° relative to the normal to the plane of the first surface (116) of the structure.

15. Assembly (110) according to any one of claims 12 to 14 taken in combination with claim 11, wherein the main body (38) of the nut is screwed onto the second, threaded end (128) of the screw, the washer (144) of said nut being in contact with the first surface (116) of the structure, the curved surfaces (142, 149) of the main body and of the washer being in contact with one another.
